# EUROPEAN PATENT APPLICATION

(11) **EP 4 796 968 A1**
(43) Date of publication of application: **26.08.2026**
(21) Application number: 24883868.2
(22) Date of filing: 20.05.2024
(51) Int. Cl.: G02B 6/293, H04J 14/02

(54) **WAVELENGTH SELECTIVE SWITCH, OPTICAL SWITCHING NODE, AND COMMUNICATION SYSTEM**

(30) Priority: 31.10.2023 CN 202311440589
(71) Applicant: HUAWEI TECHNOLOGIES CO., LTD., Shenzhen 518129 (CN)
(72) Inventor: DING, Bifeng, Shenzhen, Guangdong 518129 (CN); ZHU, Hua, Shenzhen, Guangdong 518129 (CN); LIU, Heliang, Shenzhen, Guangdong 518129 (CN)
(74) Representative: Epping - Hermann - Fischer
(86) International application number: PCT/CN2024/094127
(87) International publication number: WO 2025/091855

(57) **Abstract**

Embodiments of this application provide a wavelength selective switch, an optical switching node, and a communication system, to reduce a quantity of components included in the wavelength selective switch, and improve integration of the wavelength selective switch. The wavelength selective switch includes an input fiber, a lens group, a dispersion unit, an optical switching engine, and an output fiber array. The dispersion unit includes an optical metasurface structure. The input fiber is configured to transmit an input beam to the lens group. The lens group is configured to: collimate the input beam to obtain a first beam, and transmit the first beam to the dispersion unit. The optical metasurface structure is configured to decompose the first beam to obtain a plurality of second beams. The optical metasurface structure is further configured to collimate the plurality of second beams, to transmit the plurality of collimated second beams to the optical switching engine. The optical switching engine is configured to deflect a transmission direction of each of the plurality of second beams to obtain a plurality of output beams, where the plurality of output beams are output via the output fiber array.

## Description

This application claims priority to Chinese Patent Application No. 202311440589.2, filed with the China National Intellectual Property Administration on October 31, 2023 and entitled "WAVELENGTH SELECTIVE SWITCH, OPTICAL SWITCHING NODE, AND COMMUNICATION SYSTEM", which is incorporated herein by reference in its entirety.

### TECHNICAL FIELD

Embodiments of this application relate to the field of optical communication technologies, and in particular, to a wavelength selective switch, an optical switching node, and a communication system.

### BACKGROUND

During transmission of optical beams in an optical network by using technologies such as wavelength division multiplexing (wavelength division multiplexing, WDM), a transmission direction of beams can be routed by optical switching nodes. The optical switching node mainly performs wavelength-level routing on the transmission direction using a wavelength selective switch (wavelength selective switching, WSS). The WSS implements deflection of the beam transmission direction using an optical switching engine.

A WSS includes a fiber array, a dispersion-direction lens, a port-direction lens, a grism (grism), and an optical switching engine. The fiber array is configured to input beams, and the grism disperses the beams to obtain a plurality of sub-beams. The dispersion-direction lens and the port-direction lens are configured to collimate the sub-beams in dispersion direction and a port direction respectively. The optical switching engine deflects a transmission direction of the collimated sub-beams, and the deflected sub-beams are output from the WSS via the fiber array.

However, the existing WSS includes a large quantity of components, which increases difficulty in assembling, and results in low assembly efficiency and poor integration.

### SUMMARY

Embodiments of this application provide a wavelength selective switch, an optical switching node, and a communication system, to reduce a quantity of components included in the wavelength selective switch, and improve integration of the wavelength selective switch.

According to a first aspect, an embodiment of this application provides a wavelength selective switch, including an input fiber, a lens group, a dispersion unit, an optical switching engine, and an output fiber array. The dispersion unit includes an optical metasurface structure, the optical metasurface structure includes a plurality of nanostructures arranged along a first plane, and the first plane includes a dispersion direction and a port direction. In this case, the optical metasurface structure includes the plurality of nanostructures that are arranged in the dispersion direction and the port direction. First, the input fiber is configured to transmit an input beam to the lens group. A transmission direction of the input beam intersects with the first plane. Specifically, the transmission direction of the input beam is perpendicular to the first plane. Then, the lens group is configured to: collimate the input beam to obtain a first beam, and transmit the first beam to the dispersion unit. Then, the optical metasurface structure is configured to decompose the first beam in the dispersion direction to obtain a plurality of second beams, and the optical metasurface structure is further configured to collimate the plurality of second beams in the port direction to transmit the plurality of collimated second beams to the optical switching engine. Then, the optical switching engine is configured to deflect a transmission direction of each of the plurality of second beams to obtain a plurality of output beams, where the plurality of output beams are output via the output fiber array.

According to this aspect, the optical metasurface structure including the plurality of nanostructures can implement functions of splitting the first beam and collimating each second beam in the port direction while reducing distortion of the first beam. The dispersion unit is a component that has functions of splitting in the dispersion direction and collimating in the port direction, so that the wavelength selective switch does not need to be provided with a lens group having curvature in the port direction. This reduces a quantity of components included in the wavelength selective switch, reduces difficulty in assembling the wavelength selective switch, and improves assembly efficiency of the wavelength selective switch and integration of the wavelength selective switch.

According to the first aspect, in an optional implementation, optical paths of the plurality of second beams emitted from the dispersion unit have different projection directions in a second plane, the optical paths of the plurality of second beams emitted from the dispersion unit have different projection directions in a third plane, and the third plane intersects with the first plane and the second plane.

In this implementation, the dispersion unit in the optical metasurface structure can decompose the first beam in the dispersion direction to obtain the plurality of second beams. Compared with an existing grating structure that is used only for dispersion, the dispersion unit in the optical metasurface structure can reduce an insertion loss in a process of decomposing the first beam, and improve diffraction efficiency.

According to the first aspect, in an optional implementation, the lens group is configured to collimate the input beam in a dispersion direction, the dispersion unit is configured to collimate the second beam in a port direction, the dispersion direction intersects with the third plane, and the port direction intersects with the second plane.

In this implementation, the collimating function of the lens group in the dispersion direction and the collimating function of the dispersion unit in the port direction ensure that each second beam can be transmitted to the optical switching engine at a proper angle and with a proper light spot size, and ensure that the optical switching engine successfully deflects the transmission direction of each second beam.

According to the first aspect, in an optional implementation, the plurality of second beams include a first target beam and a second target beam, the first target beam forms a first light spot on the optical switching engine, the second target beam forms a second light spot on the optical switching engine, positions of the first light spot and the second light spot are separated from each other in the second plane, and the positions of the first light spot and the second light spot at least partially overlap in the third plane.

In this implementation, the dispersion unit in the optical metasurface structure can accurately transmit the first target beam to the optical switching engine to form the first light spot, and accurately transmit the second target beam to the optical switching engine to form the second light spot. The optical switching engine can accurately deflect a transmission direction of the first target beam and a transmission direction of the second target beam.

According to the first aspect, in an optional implementation, the optical metasurface structure includes a plurality of unit cells, each of the plurality of unit cells includes at least one nanostructure, the plurality of unit cells include a first unit cell and a second unit cell, and a nanostructure included in the first unit cell is different from a nanostructure included in the second unit cell.

In this implementation, the dispersion unit in the optical metasurface structure can decompose the first beam in the dispersion direction to obtain the plurality of second beams, and the dispersion unit in the optical metasurface structure can further collimate each second beam in the port direction, so that the wavelength selective switch does not need to be provided with the lens group having the curvature in the port direction. This reduces the quantity of components included in the wavelength selective switch.

According to the first aspect, in an optional implementation, that the nanostructure included in the first unit cell is different from the nanostructure included in the second unit cell means at least one of the following:
A quantity of nanostructures included in the first unit cell is different from a quantity of nanostructures included in the second unit cell, dimensions of the nanostructure included in the first unit cell are different from dimensions of the nanostructure included in the second unit cell, an arrangement of the nanostructure included in the first unit cell is different from an arrangement of the nanostructure included in the second unit cell, and a shape of the nanostructure included in the first unit cell is different from a shape of the nanostructure included in the second unit cell.

In this implementation, the dispersion unit in the optical metasurface structure can decompose the first beam in the dispersion direction to obtain the plurality of second beams, and the dispersion unit in the optical metasurface structure can further collimate each second beam in the port direction, so that the wavelength selective switch does not need to be provided with a lens group having curvature in the port direction. This reduces a quantity of components included in the wavelength selective switch.

According to the first aspect, in an optional implementation, the optical metasurface structure includes a plurality of regions, each of the plurality of regions includes a plurality of unit cells, the plurality of regions include a first region and a second region, and a nanostructure included in the first region is different from a nanostructure included in the second region. The first region is configured to receive a first output beam from the optical switching engine, the second region is configured to receive a second output beam from the optical switching engine, and the plurality of output beams include the first output beam and the second output beam. The first region is further configured to focus the first output beam in the port direction, where the focused first output beam is output via a first output fiber. The second region is further configured to focus the second output beam in the port direction, where the focused second output beam is output via a second output fiber. The output fiber array includes the first output fiber and the second output fiber.

In this implementation, the dispersion unit in the optical metasurface structure can combine first output beams in the dispersion direction to obtain a first combined beam, and the dispersion unit in the optical metasurface structure can further focus the first output beam in the port direction, so that the wavelength selective switch does not need to be provided with a lens group having curvature in the port direction. This reduces a quantity of components included in the wavelength selective switch. Similarly, the dispersion unit in the optical metasurface structure can combine second output beams in the dispersion direction to obtain a second combined beam, and the dispersion unit in the optical metasurface structure can further focus the second output beam in the port direction, so that the wavelength selective switch does not need to be provided with a lens group having curvature in the port direction. This reduces a quantity of components included in the wavelength selective switch.

According to the first aspect, in an optional implementation, that the nanostructure included in the first region is different from the nanostructure included in the second region means at least one of the following:
A quantity of nanostructures included in the first region is different from a quantity of nanostructures included in the second region, dimensions of the nanostructure included in the first region are different from dimensions of the nanostructure included in the second region, an arrangement of the nanostructure included in the first region is different from an arrangement of the nanostructure included in the second region, and a shape of the nanostructure included in the first region is different from a shape of the nanostructure included in the second region.

In this implementation, the dispersion unit in the optical metasurface structure can have functions of combining in the dispersion direction and focusing in the port direction.

According to the first aspect, in an optional implementation, the dispersion unit includes a substrate, and a first surface of the substrate includes the optical metasurface structure.

According to the first aspect, in an optional implementation, a second surface of the substrate includes at least one coating, and a material of the substrate is different from a material of the coating.

In this implementation, the dispersion unit including the coating can improve diffraction efficiency during routing of the transmission direction of the input beam, and reduce diffraction loss.

According to the first aspect, in an optional implementation, the dispersion unit further includes a prism, a first surface of the prism faces the lens group, and a second surface of the prism is connected to the second surface of the substrate. In this implementation, the prism is configured to adjust an angle at which the first beam is incident to the optical metasurface structure, so as to ensure that the plurality of second beams emitted from the dispersion unit are linearly distributed, so that the plurality of second beams can be evenly emitted from the dispersion unit.

According to the first aspect, in an optional implementation, that the dispersion unit is configured to transmit the plurality of collimated second beams to the optical switching engine includes: The optical metasurface structure is configured to reflect the plurality of collimated second beams to the optical switching engine, or the optical metasurface structure is configured to transmit the plurality of collimated second beams to the optical switching engine. In this implementation, the optical metasurface structure may be of a transmissive type or a reflective type, to implement flexibility of an optical path design in a process of routing the input beam.

According to a second aspect, an embodiment of this application provides an optical switching node. The optical switching node includes a plurality of wavelength selective switches, two different wavelength selective switches are connected to each other via an optical fiber, and the wavelength selective switch is shown in the first aspect. Details are not described again.

According to a third aspect, an embodiment of this application provides a communication system, including a housing body. A processing chip, an optical-electrical conversion module are fastened in the housing body, and a wavelength selective switch, the processing chip, the optical-electrical conversion module, and the wavelength selective switch are sequentially connected, and the wavelength selective switch is the wavelength selective switch in any one of the first aspect or the possible implementations of the first aspect. The processing chip is configured to send a service electrical signal to the optical-electrical conversion module. The optical-electrical conversion module is configured to convert the service electrical signal into the input beam. The wavelength selective switch is configured to route a transmission direction of the input beam, to emit the output beam.

According to a fourth aspect, this application provides an optical network. The optical network includes a first communication system and a second communication system. For descriptions of the first communication system and the second communication system, refer to the third aspect.

### BRIEF DESCRIPTION OF DRAWINGS

FIG. 1 is an example diagram of a structure of an optical switching node according to this application;
FIG. 2 is an example diagram of a structure of an existing WSS;
FIG. 3 is an example diagram of an overall structure of a first embodiment of a WSS according to this application;
FIG. 4 is an example diagram of a structure of a WSS in a second plane according to this application;
FIG. 5 is an example diagram of a structure of a WSS in a third plane according to this application;
FIG. 6 is an example diagram of a structure of an embodiment of a dispersion unit according to this application;
FIG. 7a is an example diagram of a structure of a first embodiment of a nanopillar according to this application;
FIG. 7b is an example diagram of a structure of a second embodiment of a nanopillar according to this application;
FIG. 7c is an example diagram of a structure of a third embodiment of a nanopillar according to this application;
FIG. 7d is an example diagram of a structure of a fourth embodiment of a nanopillar according to this application;
FIG. 8 is an example diagram of an overall structure of a second embodiment of a WSS according to this application; and
FIG. 9 is an example diagram of a structure of an embodiment of an optical network according to this application.

### DESCRIPTION OF EMBODIMENTS

The following clearly and completely describes technical solutions in embodiments of the present invention with reference to accompanying drawings in embodiments of the present invention. It is clear that the described embodiments are merely a part rather than all of embodiments of the present invention. All other embodiments obtained by a person skilled in the art based on embodiments of the present invention without creative efforts shall fall within the protection scope of the present invention.

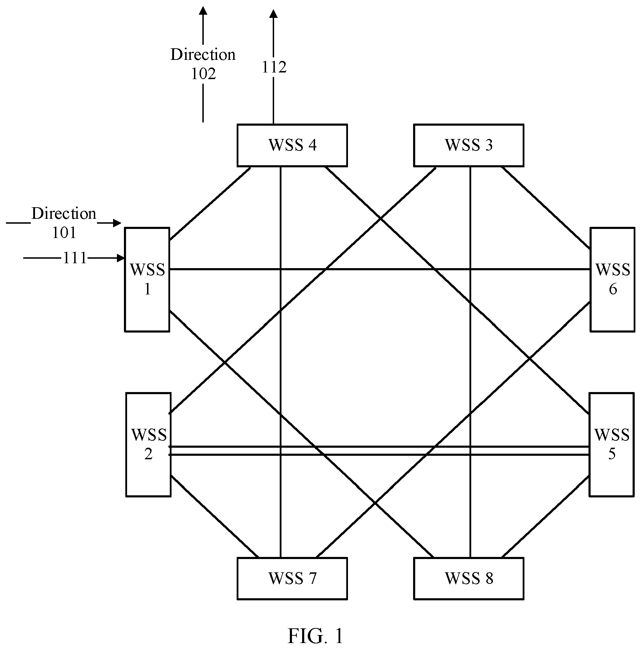

This application provides an optical switching node. The optical switching node is configured to route a transmission direction of a beam. The optical switching node may be a reconfigurable optical add-drop multiplexer (reconfigurable optical add-drop multiplexer, ROADM), an optical cross-connect (optical cross-connect, OXC), or the like. The optical switching node mainly performs wavelength-level routing on the transmission direction of the beam via a WSS. A structure of the optical switching node provided in this application is described with reference to FIG. 1. FIG. 1 is an example diagram of a structure of an optical switching node according to this application. In this example, an example in which the optical switching node is an ROADM is used for example description. A specific network structure of the ROADM is not limited in this example. For example, the ROADM may use a network structure of a chain network, a ring network, a mesh network, or the like. As shown in FIG. 1, an example in which the ROADM uses a network structure of a mesh network is used for example description.

In this example, the ROADM includes eight WSSs (namely, a WSS 1 and a WSS 2 to a WSS 8). The eight WSSs are located at different positions. A quantity of WSSs included in the ROADM and positions of the WSSs are not limited in this example. The WSSs located at the different positions are configured to route a transmission direction of a beam. The WSS 1 is used as an example. The WSS 1 may send a beam to any WSS that is included in the ROADM and that is connected to the WSS 1 via an optical fiber, to route different transmission directions of the beam. For example, in the ROADM, if the WSS 4, the WSS 6, and the WSS 8 are connected to the WSS 1 via optical fibers, the WSS 1 may send a beam to any one of the WSS 4, the WSS 6, and the WSS 8. In this example, an example in which the WSS 1 is connected to the WSS 4, the WSS 6, and the WSS 8 via optical fibers is used for example description. This is not limited. For another example, the WSS 1 may alternatively be connected, via an optical fiber, to any one of the WSS 2, the WSS 3, the WSS 5, and the WSS 7 that are included in the ROADM.

The following continues to describe a process of routing a transmission direction of a beam by using the WSS 1 and the WSS 4 as an example.

A first beam 111 transmitted in a direction 101 is input to the WSS 1 via an input fiber of the WSS 1, the WSS 1 routes a transmission direction of the beam, and then, a second beam 112 is output via an output fiber of the WSS 1. The output fiber of the WSS 1 is connected to the WSS 4 via an optical fiber. The WSS 1 sends the second beam 112 to the WSS 4. The second beam 112 is output from an output fiber included in the WSS 4, and the second beam 112 output from the WSS 4 is transmitted in a direction 102. The direction 101 shown in this example is different from the direction 102. It can be learned that the ROADM shown in FIG. 1 can route the transmission direction of the first beam 111 from the direction 101 to the direction 102.

It may be understood that an optical switching engine included in the WSS is configured to deflect a transmission direction of any input wavelength or any group of input wavelengths, so that the deflected wavelength is output from any output fiber.

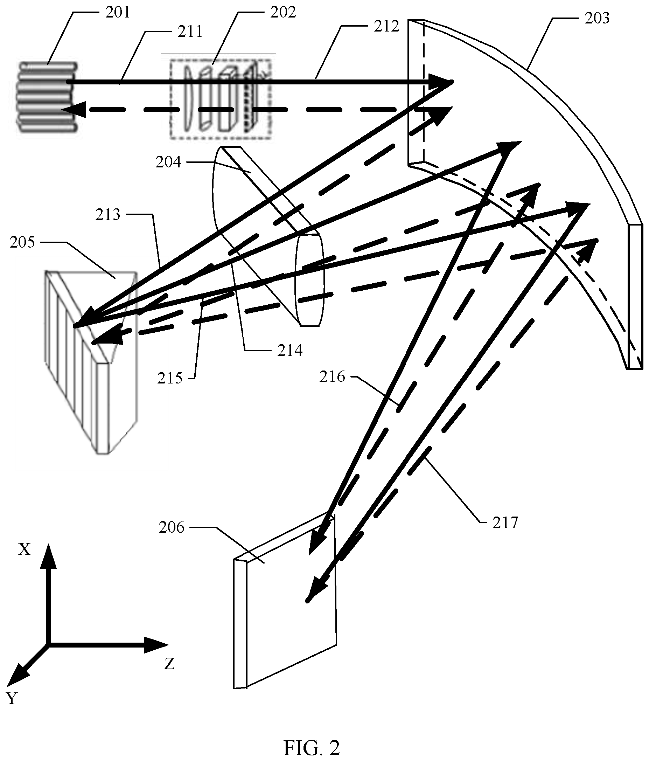

To better understand the WSS provided in embodiments of this application, the following first describes an existing WSS with reference to FIG. 2. FIG. 2 is an example diagram of a structure of an existing WSS. The existing WSS includes a fiber array 201, a light spot shaping and polarization splitting component 202, a dispersion-direction lens 203, a port-direction lens 204, a grism 205, and an optical switching engine 206. An input beam 211 is input to the WSS via an input fiber in the fiber array 201. The light spot shaping and polarization splitting component 202 performs shaping and polarization state processing on the input beam 211 to output a processed beam 212. The dispersion-direction lens 203 and the port-direction lens 204 collimate the processed beam 212 in a dispersion direction and a port direction respectively, to obtain a collimated beam 213. The grism 205 disperses the collimated beam 213 to obtain a plurality of sub-beams, for example, a sub-beam 214 and a sub-beam 215. The port-direction lens 204 and the dispersion-direction lens 203 collimate the sub-beam in the port direction and the dispersion direction respectively, to obtain a collimated sub-beam. The optical switching engine 206 deflects a transmission direction of each collimated sub-beam, to obtain a plurality of deflected sub-beams, for example, a deflected sub-beam 216 and a deflected sub-beam 217. The dispersion-direction lens 203 and the port-direction lens 204 separately focus each deflected sub-beam to obtain a focused sub-beam. The grism 205 combines focused sub-beams to obtain a combined beam. The port-direction lens 204 and the dispersion-direction lens 203 separately focus the combined beam to obtain an output beam, where the output beam is transmitted to an output fiber included in the fiber array, and the output fiber is configured to emit the output beam. It may be understood that the existing WSS needs to be separately provided with a dispersion-direction lens having curvature in a dispersion direction and a port-direction lens having curvature in a port direction, resulting in a large quantity of components included in the existing WSS, increasing difficulty in assembling the WSS, and resulting in low assembly efficiency of the WSS and poor integration.

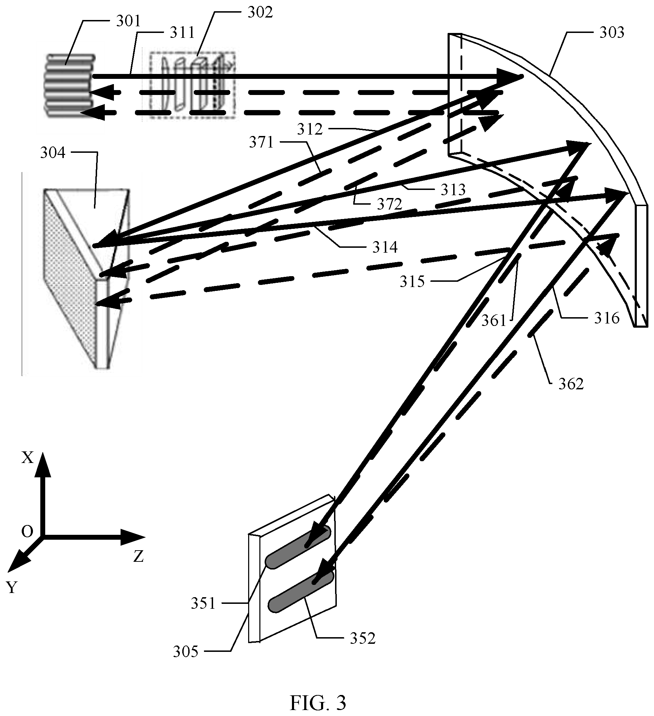

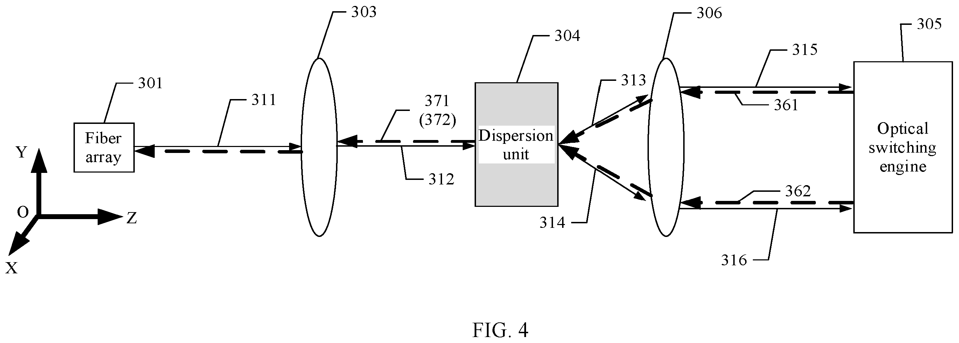

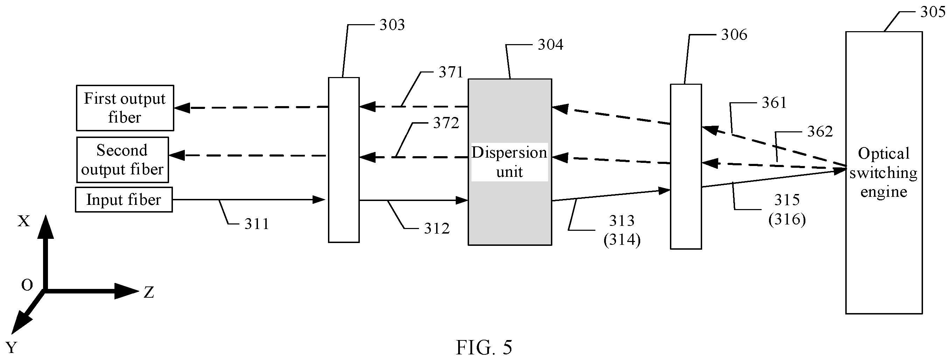

However, the WSS provided in this embodiment of this application does not need to be provided with a port-direction lens having curvature in a port direction. This effectively improves integration of the WSS. The following describes a structure of the WSS provided in this embodiment. FIG. 3 is an example diagram of an overall structure of a first embodiment of a WSS according to this application. FIG. 4 is an example diagram of a structure of a WSS in a second plane according to this application. FIG. 5 is an example diagram of a structure of a WSS in a third plane according to this application. The WSS shown in FIG. 3 is located in a coordinate system XYZ with O as a coordinate origin. The second plane YOZ shown in FIG. 4 specifically includes a Y axis and a Z axis in the coordinate system XYZ. The third plane XOZ shown in FIG. 5 specifically includes an X axis and the Z axis in the coordinate system XYZ.

The WSS described in this embodiment includes a fiber array (fiber array, FA) 301, a dispersion-direction lens group, a dispersion unit 304, and an optical switching engine 305. The fiber array described in this embodiment includes one or more input fibers. A quantity of input fibers included in the fiber array is not limited in embodiments. The fiber array further includes an output fiber array, and the output fiber array includes a plurality of output fibers. A quantity of output fibers included in the output fiber array is not limited in embodiments. The FA 301 is located in or near a front focal plane of the dispersion unit 304. The optical switching engine 305 is located in or near a back focal plane of the dispersion unit 304. In this case, the FA 301, the dispersion unit 304, and the optical switching engine 305 form a 2f optical system.

Optionally, the WSS described in this embodiment further includes a beam shaping and polarization splitting component 302. The input fiber is configured to transmit an input beam 311 to the beam shaping and polarization splitting component 302. The input beam 311 described in this embodiment is WDM signal light. In this embodiment, for example, a transmission direction of the input beam 311 emitted from the input fiber 311 overlaps with the Z axis in the coordinate system XYZ. It should be noted that, in this embodiment, the transmission direction of the input beam 311 overlaps with the Z axis; and in another example, there may alternatively be a specific included angle between the transmission direction of the input beam 311 and the Z axis. This is not specifically limited in embodiments.

The beam shaping and polarization splitting component 302 is configured to: shape the input beam 311, and adjust a polarization state of the input beam 311. A function of the beam shaping and polarization splitting component 302 is not limited in embodiments, and may be correspondingly adjusted based on a design of the WSS. For example, the beam shaping and polarization splitting component 302 may adjust a light spot of the input beam 311 from a circular light spot to an elliptical light spot, so that the light spot of the input beam 311 emitted from the beam shaping and polarization splitting component 302 is elliptical; and is configured to: split the input beam 311 into two beams in orthogonal polarization states, adjust the polarization states of the two beams to be consistent, and output the two beams from the beam shaping and polarization splitting component 302. It should be noted that neither a light spot shape nor a polarization state of the beam emitted from the beam shaping and polarization splitting component 302 is limited in embodiments. A device type of the beam shaping and polarization splitting component 302 is not limited in embodiments. For example, the beam shaping and polarization splitting component 302 may include at least one of a crystal, a prism, a polarization grating, a micro lens array (micro lens array, MLA), a diffraction element, and a lens group.

The input beam 311 emitted from the beam shaping and polarization splitting component 302 is transmitted to the dispersion-direction lens group. A specific quantity of lenses included in the dispersion-direction lens group is not limited in embodiments. In the example shown in FIG. 3, the dispersion-direction lens group includes a first lens 303. In the examples shown in FIG. 4 and FIG. 5, the dispersion-direction lens group includes a first lens 303 and a second lens 306. In the example shown in FIG. 3, the first lens 303 can implement functions implemented by the first lens 303 and the second lens 306 in the examples shown in FIG. 4 and FIG. 5. The first lens 303 described in this embodiment is configured to: collimate the input beam 311 to obtain a first beam 312, and transmit the first beam 312 to the dispersion unit 304. The following describes a process in which the first lens 303 collimates the input beam 311 to obtain the first beam 312. Specifically, the first lens 303 is configured to collimate the input beam 311 in a dispersion direction to obtain the collimated first beam 312. In this embodiment, for example, the dispersion direction overlaps with the Y axis in the coordinate system XYZ. It should be noted that, in another example, there may alternatively be a specific included angle between the dispersion direction and the Y axis. This is not specifically limited. In the dispersion direction, the input beam 311 is incident to the first lens 303 at a first divergence angle, and the first beam 312 is emitted from the first lens 303 at a second divergence angle. The first divergence angle is greater than the second divergence angle due to a function of collimating the input beam 311 by the first lens 303. The first beam 312 has a very small second divergence angle due to the collimating function of the first lens 303 in this embodiment in the dispersion direction. In this embodiment, in the dispersion direction, a beam waist of the input beam 311 is less than a beam waist of the first beam 312 due to the collimating function of the first lens 303. The beam waist of the input beam 311 in the dispersion direction is a position with maximum light intensity in the input beam 311 in the dispersion direction, and is also a position with a minimum beam diameter of the input beam 311. At the beam waist, light intensity distribution presents a characteristic of Gaussian distribution. For descriptions of the beam waist of the first beam 312, refer to the descriptions of the beam waist of the input beam 311. Details are not described again.

In this embodiment, for example, the first lens 303 is a cylindrical lens having curvature in the dispersion direction. In another example, the first lens 303 may alternatively be a spherical lens, a sphero-cylindrical lens, an aspherical lens, or a non-sphero-cylindrical lens. In addition, the first lens 303 in this embodiment may be a reflective lens (for example, as shown in FIG. 3) or a transmissive lens (for example, as shown in FIG. 4 and FIG. 5). This is not specifically limited. With reference to FIG. 4 and FIG. 5, the first lens 303 shown in FIG. 4 has curvature in the dispersion direction (for example, overlapping with the Y axis), and the first lens 303 shown in FIG. 5 has no curvature in the port direction (for example, overlapping with the X axis).

The dispersion unit 304 described in this embodiment is configured to decompose the first beam 312 irradiated on the dispersion unit 304 into a plurality of second beams with different wavelengths. A quantity of the second beams is not limited in embodiments. The dispersion unit 304 described in this embodiment has two functions:
Function 1: The dispersion unit 304 has a wavelength-based splitting function.

With reference to FIG. 3 and FIG. 4, the dispersion unit 304 decomposes the first beam 311 into a first target beam 313 and a second target beam 314 in the second plane YOZ. A wavelength of the first target beam 313 is different from a wavelength of the second target beam 314. The first target beam 313 and the second target beam 314 that are emitted from the dispersion unit 304 are dispersed in the dispersion direction. In this embodiment, for example, the dispersion direction overlaps with the Y axis in the coordinate system XYZ. In another example, there may alternatively be a specific included angle between the dispersion direction and the Y axis. It should be noted that the quantity of the second beams emitted after the first beam 311 is decomposed by the dispersion unit 304 is not limited in embodiments. For example, the first beam 312 is decomposed into N second beams due to the dispersing function of the dispersion unit 304 in the dispersion direction, and wavelengths of different second beams are different from each other. In this case, the N second beams emitted from the dispersion unit are respectively *λ*₁ and *λ*₂ to *λ*_{N} , where N is any integer greater than 2.

With reference to FIG. 3 and FIG. 5, the first target beam and the second target beam that are included in the N second beams are used as an example. In the third plane XOZ, the first target beam 313 is emitted from the dispersion unit 304 at a first emergent angle, and the second target beam 314 is emitted from the dispersion unit 304 at a second emergent angle. The third plane XOZ includes the X axis and the Z axis in the coordinate system XYZ. For example, the first emergent angle is an included angle between the first target beam 313 and the second plane YOZ. For another example, the first emergent angle is an included angle, between the first target beam 313 and an extension line of the first beam 312, in the third plane XOZ. The second emergent angle is an included angle between the second target beam 314 and the second plane YOZ. For another example, the second emergent angle is an included angle, between the second target beam 314 and the extension line of the first beam 312, in the third plane XOZ. In this embodiment, for example, the first emergent angle is equal to the second emergent angle. In another example, the first emergent angle may alternatively be approximately equal to the second emergent angle. Details are not described in embodiments.

With reference to FIG. 3 and FIG. 4, in the second plane YOZ, the first target beam 313 is emitted from the dispersion unit 304 at a third emergent angle, and the second target beam 314 is emitted from the dispersion unit 303 at a fourth emergent angle. The second plane YOZ includes the Y axis and the Z axis in the coordinate system XYZ. For example, the third emergent angle is an included angle between the first target beam 313 and the third plane XOZ. For another example, the third emergent angle is an included angle, between the first target beam 313 and the extension line of the first beam 312, in the second plane YOZ. The fourth emergent angle is an included angle between the second target beam 314 and the third plane XOZ. For another example, the fourth emergent angle is an included angle, between the second target beam 314 and the extension line of the first beam 312, in the second plane YOZ. In this embodiment, the third emergent angle is different from the fourth emergent angle.

With reference to FIG. 3 to FIG. 5, it may be understood that, because the third emergent angle is different from the fourth emergent angle, an optical path of the first target beam 313 and an optical path of the second target beam 314 have different projection directions in the second plane YOZ. Specifically, a plurality of projection rays that are parallel to each other are irradiated to the optical path of the first target beam 313, to form a first orthographic projection in the second plane YOZ, and each projection ray is perpendicular to the second plane YOZ. A transmission direction of the first target beam 313 is the same as a pointing direction of the first orthographic projection. For example, if the transmission direction of the first target beam 313 shown in FIG. 4 faces the second lens 306, the pointing direction of the first orthographic projection also faces the second lens 306. A plurality of projection rays that are parallel to each other are irradiated to the optical path of the second target beam 314, to form a second orthographic projection in the second plane YOZ. A transmission direction of the second target beam 314 is the same as a pointing direction of the second orthographic projection. In this embodiment, that the optical path of the first target beam 313 and the optical path of the second target beam 314 have the different projection directions in the second plane YOZ means that the pointing direction of the first orthographic projection is different from the pointing direction of the second orthographic projection, that is, there is an included angle, between the first orthographic projection and the second orthographic projection, in the second plane YOZ. Because the first emergent angle is equal to the second emergent angle, the optical path of the first target beam 313 and the optical path of the second target beam 314 have a same projection direction in the third plane XOZ. Specifically, a plurality of projection rays that are parallel to each other are irradiated to the optical path of the first target beam 313, to form a third orthographic projection in the third plane XOZ, and each projection ray is perpendicular to the third plane XOZ. A transmission direction of the first target beam 313 is the same as a pointing direction of the third orthographic projection. A plurality of projection rays that are parallel to each other are irradiated to the optical path of the second target beam 314, to form a fourth orthographic projection in the third plane XOZ. A transmission direction of the second target beam 314 is the same as a pointing direction of the fourth orthographic projection. In this embodiment, that the optical path of the first target beam 313 and the optical path of the second target beam 314 have the same projection direction in the third plane XOZ means that the pointing direction of the third orthographic projection is the same as and overlaps with the pointing direction of the fourth orthographic projection.

Function 2: The dispersion unit 304 has a function of collimating each second beam in the port direction.

In this embodiment, for example, the port direction overlaps with the X axis in the coordinate system XYZ. In another example, there may alternatively be a specific angle between the port direction and the X axis. This is not specifically limited. In the third plane XOZ, the first beam 312 is incident to the dispersion unit 304 at a third divergence angle, and the first target beam 313 is emitted from the dispersion unit 304 at a fourth divergence angle. The third divergence angle is greater than the fourth divergence angle due to a function of collimating the first beam 312 in the port direction by the dispersion unit 304. Due to a function of collimating each second beam in the port direction by the dispersion unit 304, each second beam can be transmitted to the optical switching engine 305 after being collimated in the port direction. For descriptions of collimation of the dispersion unit 304 in the port direction, refer to the descriptions of collimation of the first lens 303 in the dispersion direction. Details are not described again.

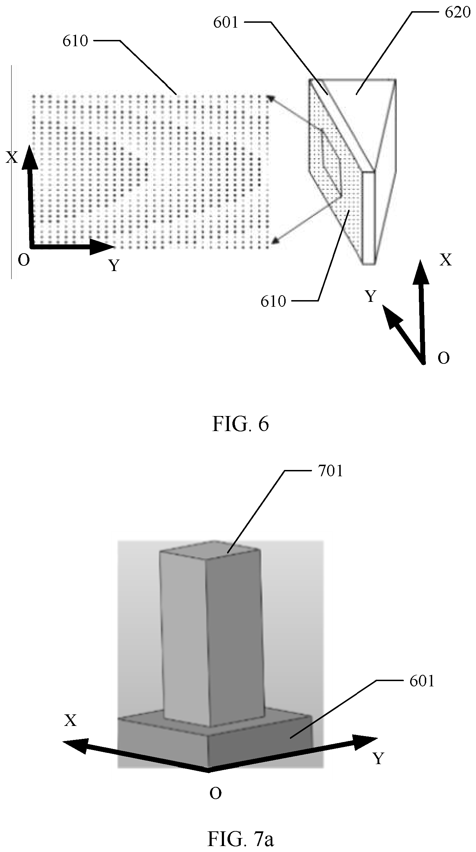

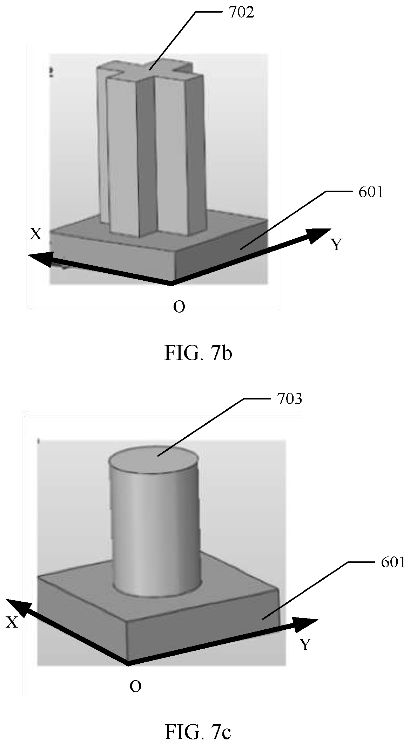

The following describes a structure of the dispersion unit 304 that implements the function 1 and the function 2. Optional structure 1 of the dispersion unit 304:
The following describes the structure of the dispersion unit 304 provided in this embodiment with reference to FIG. 3 and FIG. 6. FIG. 6 is an example diagram of a structure of an embodiment of a dispersion unit according to this application. The dispersion unit 304 in this embodiment includes a substrate 601, where the substrate 601 has a first surface and a second surface, the second surface of the substrate 601 faces the first lens 303, and the first surface of the substrate 601 includes an optical metasurface structure 610. It should be noted that, in this embodiment, for example, the first surface of the substrate 601 includes the optical metasurface structure 610. In another example, the optical metasurface structure 610 may alternatively be located on the second surface of the substrate 601. The optical metasurface structure 610 implements the splitting function of the dispersion unit 304 shown in the function 1 and the function of collimating each second beam in the port direction shown in the function 2. Specifically, the optical metasurface structure 610 includes a plurality of nanostructures arranged along a first plane XOY, and each nanostructure may be a nanofin (Nanofin) or a nanopillar (Nanopillar). In this embodiment, for example, each nanostructure is a nanopillar. For example, FIG. 7a is an example diagram of a structure of a first embodiment of a nanopillar according to this application. The nanopillar 701 included in the dispersion unit 304 shown in FIG. 7a may be a square pillar. For another example, FIG. 7b is an example diagram of a structure of a second embodiment of a nanopillar according to this application. The nanopillar 702 included in the dispersion unit 304 shown in FIG. 7b may be a cross-shaped pillar. For another example, FIG. 7c is an example diagram of a structure of a third embodiment of a nanopillar according to this application. The nanopillar 703 included in the dispersion unit 304 shown in FIG. 7c may be cylindrical. It should be noted that descriptions of the nanopillar structure are not limited in embodiments. In another example, the nanopillar may alternatively be an elliptical pillar, a triangular pillar, a square pillar, or the like. The optical metasurface structure 610 including a plurality of nanopillars is made of an artificial composite material having a nanostructure, so that a weight and a thickness of the dispersion unit 304 are greatly reduced. In addition, the dispersion unit 304 decomposes the first beam 311 into a plurality of second beams based on the optical metasurface structure 610, and a height of the nanostructure included in the optical metasurface structure 610 is usually at a sub-wavelength level. Therefore, functions of splitting the first beam (for example, the function 1) and collimating each second beam in the port direction (for example, the function 2) can be implemented while distortion of the first beam 311 is reduced. Still as shown in FIG. 6, the optical metasurface structure 610 specifically includes a plurality of nanostructures arranged in the dispersion direction and a plurality of nanostructures arranged in the port direction. The plurality of included nanostructures included in the optical metasurface structure 610 can implement refractive index distribution in the function 1 and the function 2.

Specifically, the dispersion unit 304 described in this embodiment includes M unit cells, each unit cell includes at least one nanostructure, and M is any integer greater than 1. For example, a value of M described in this embodiment may be any value like 2000 or 10000. In this embodiment, for example, each unit cell includes a nanostructure. M unit cells include a first unit cell and a second unit cell, and a first nanostructure included in the first unit cell is different from a second nanostructure included in the second unit cell. The first unit cell and the second unit cell are any two units in the M unit cells. That the first nanostructure included in the first unit cell is different from the second nanostructure included in the second unit cell means at least one of the following:
A quantity of first nanostructures included in the first unit cell is different from a quantity of second nanostructures included in the second unit cell, dimensions of the first nanostructure are different from dimensions of the second nanostructure, an arrangement of the first nanostructure is different from an arrangement of the second nanostructure, and a shape of the first nanostructure is different from a shape of the second nanostructure.

The dimensions of the first nanostructure include a height of the first nanostructure and/or a diameter of a cross section of the first nanostructure. The height of the first nanostructure is a height of the first nanostructure in a direction of the Z axis in the coordinate system XYZ. The cross section of the first nanostructure is a cross section obtained by cutting the first nanostructure by using a plane parallel to the first plane XOY as a cutting plane. For descriptions of the dimensions of the second nanostructure, refer to the descriptions of the dimensions of the first nanostructure. Details are not described again. The arrangement of the first nanostructure is density of the first nanostructures included in the first unit cell, and/or a distance between two adjacent first nanostructures included in the first unit cell. For descriptions of the arrangement of the second nanostructure, refer to the descriptions of the arrangement of the first nanostructure. Details are not described again. For descriptions of the shape of the first nanostructure, refer to FIG. 7a to FIG. 7c. Details are not described again.

Optional structure 2 of the dispersion unit 304:
Still as shown in FIG. 6, the dispersion unit 304 further includes a prism 620, where a first surface of the prism 620 faces the first lens, and a second surface of the prism 620 is connected to the second surface of the substrate 601. Specifically, the second surface of the prism 620 is bonded to the second surface of the substrate 601 via optical glue or the like. The prism 620 described in this embodiment is configured to adjust an angle at which the first beam 312 is incident to the optical metasurface structure 610, so as to ensure that the plurality of second beams emitted from the dispersion unit 304 are linearly distributed, so that the plurality of second beams can be evenly emitted from the dispersion unit 304. That the plurality of second beams are linearly distributed means that an included angle between any two adjacent second beams in the plurality of second beams emitted from the dispersion unit 304 falls within a preset angle range. For example, the preset range is 15 degrees. The N second beams are emitted from the dispersion unit 304, and are specifically *λ*₁ and *λ*₂ to *λ*_{N} , where N is any integer greater than 2. An included angle between *λ*₁ and *λ*₂ that are emitted from the dispersion unit 304 is 0.1 degrees. By analogy, an included angle between λ_{N-1} and *λ*_{N} that are emitted from the dispersion unit 304 is also 15 degrees. The plurality of second beams emitted from the dispersion unit 304 are linearly distributed. It should be noted that, in this embodiment, for example, the prism 620 is a triangular prism. This is not specifically limited. For example, the prism 620 may alternatively be a rectangular prism or a pentagonal prism.

Optional structure 3 of the dispersion unit 304:

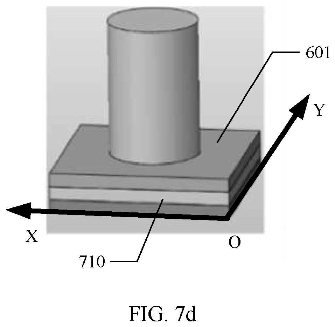

FIG. 7d is an example diagram of a structure of a fourth embodiment of a nanopillar according to this application. Based on the optional structure 1 or the optional structure 2 of the dispersion unit 304, the second surface of the substrate 601 includes at least one coating 710, and a material of the substrate 601 described in this embodiment is different from a material of the coating 710. For example, the substrate 601 may be made of silicon (Si) or silicon dioxide (SiO₂), and the coating 710 may be made of silicon nitride (Si₃N₄) or titanium dioxide (TiO₂). The dispersion unit 304 including the coating can improve diffraction efficiency during routing of the transmission direction of the input beam, and reduce diffraction loss.

In the dispersion unit 304 in this embodiment, different nanostructures can generate different propagation modes or resonance modes due to at least one of the following: dimensions, distribution forms, or shapes of the nanostructures. When the first beam passes through the nanostructures having different propagation modes or resonance modes, the second beams emitted from the optical metasurface structure have different phases. In this embodiment, for example, the dispersion unit 304 is of a reflective type. In other words, the optical metasurface structure included in the dispersion unit 304 is a reflective optical metasurface structure. In this case, when the first beam passes through the nanostructures having different propagation modes or resonance modes, the second beams reflected from the optical metasurface structure have different reflection phases. In addition, reflectivity is effectively improved. At least one of the optical metasurface structure and the substrate described in this embodiment is configured to implement the reflective optical metasurface structure. For example, the material, the arrangement, the shape, or the like of the nanostructure included in the optical metasurface structure may be adjusted, so that the optical metasurface structure is of a reflective type. For another example, the material of the substrate may be adjusted, so that the optical metasurface structure is of a reflective type.

In this embodiment, phase distribution of the optical metasurface structure may be changed by adjusting the dimensions of the nanostructure. For example, in a sequence in which dimensions of the nanostructures included in the optical metasurface structure change from small to large, a phase may vary within the range from 0 to 2π. It may be understood that the dimensions of the nanostructure are set, so that phase distribution of the optical metasurface structure is adjusted, the dispersion unit decomposes the first beam in the dispersion direction to obtain the plurality of second beams, the transmission direction of each second beam emitted from the dispersion unit is accurately controlled, and each second beam is collimated in the port direction. In the foregoing example, the dispersion unit adjusts the phase distribution of the optical metasurface structure by adjusting the dimensions of the nanostructure. In another example, the phase distribution of the optical metasurface structure may alternatively be adjusted by adjusting at least one of the dimensions, the arrangement, or the shape of the nanostructure.

The plurality of second beams emitted from the dispersion unit 304 are transmitted to the dispersion-direction lens group, and the dispersion-direction lens group is configured to focus each second beam in the dispersion direction to obtain a plurality of third beams. For example, the first lens 303 shown in FIG. 3 focuses the first target beam 313 to obtain a third beam 315, and the first lens 303 focuses the second target beam 314 to obtain a third beam 316. In the examples shown in FIG. 4 and FIG. 5, the second lens 306 focuses the first target beam 313 to obtain a third beam 315, and the second lens 306 focuses the second target beam 314 to obtain a third beam 316. In this embodiment, in the dispersion direction, a beam waist of the first target beam 313 is greater than a beam waist of the third beam 315 due to a focusing function of the second lens 306. For descriptions of the beam waist, refer to the descriptions of the beam waist of the first beam 312. Details are not described again. With reference to FIG. 3 and FIG. 4, in the second plane YOZ, the third beam 315 and the third beam 316 are transmitted to the optical switching engine 305 in different directions respectively. The third beam 315 is irradiated to a first switching region of the optical switching engine 305 to form a first light spot 351, and the third beam 316 is irradiated to a second switching region of the optical switching engine 305 to form a second light spot 352. Due to the collimating function of the dispersion unit 304 in the port direction and the focusing function of the dispersion-direction lens group in the dispersion direction, positions of the first light spot 351 and the second light spot 352 are separated from each other in the second plane YOZ. With reference to FIG. 3 and FIG. 5, in the third plane XOZ, the third beam 315 and the third beam 316 are transmitted to the optical switching engine 305 in a same direction. The positions of the first light spot 351 and the second light spot 352 at least partially overlap in the third plane XOZ. A surface of the optical switching engine 305 described in this embodiment is parallel to the third plane XOZ. It may be understood that, due to the collimating function of the dispersion unit 304 in the port direction and the focusing function of the dispersion-direction lens group in the dispersion direction, the optical switching engine 305 receives N wavelengths, which are respectively *λ*₁ and *λ*₂ to *λ*_{N} . The N wavelengths are irradiated on the optical switching engine 305 to form N light spots. Positions of the N light spots at least partially overlap in the third plane XOZ. The positions of the N light spots are separated from each other in the second plane YOZ.

The optical switching engine 305 described in this embodiment is configured to deflect a transmission direction of each third beam, so that the optical switching engine 305 emits a plurality of output beams whose transmission directions are deflected. The optical switching engine 305 described in this embodiment may be a liquid crystal on silicon (liquid crystal on silicon, LCOS), a liquid crystal (liquid crystal, LC) array chip, a micro-electro-mechanical system (micro-electro-mechanical system, MEMS), a digital light processor (digital light processor, DLP), a dual-axis MEMS, or the like. In this embodiment, for example, the optical switching engine 305 is an LCOS. A refractive index of the first switching region is changed by applying a first voltage to the first switching region of the optical switching engine 305, to deflect a transmission direction of the third beam 315 in the port direction, to emit a first output beam 361. A refractive index of the second switching region is changed by applying a second voltage to the second switching region of the optical switching engine 305, to deflect a transmission direction of the third beam 316 in the port direction, to emit a second output beam 362. If the optical switching engine 305 described in this embodiment is an MEMS, the third beam 315 is incident to a first reflection lens included in the MEMS, and the third beam 316 is incident to a second reflection lens included in the MEMS. The first reflection lens and the second reflection lens are controlled to rotate, so that the first output beam 361 and the second output beam 362 are emitted from the MEMS at different emergent angles. If the optical switching engine 305 described in this embodiment is a dual-axis MEMS, the dual-axis MEMS emits the first output beam 361 and the second output beam 362 from the optical switching engine 305 at different emergent angles based on wavelengths of the first output beam 361 and the second output beam 362.

The output fiber array described in this embodiment includes the plurality of output fibers. The quantity of output fibers included in the output fiber array is not limited in embodiments. For example, the output fiber array includes a first output fiber and a second output fiber, positions of the first output fiber and the second output fiber overlap in the second plane YOZ, and the positions of the first output fiber and the second output fiber are separated in the third plane XOZ. In other words, in the port direction, the position of the first output fiber is different from the position of the second output fiber. It should be noted that descriptions of an arrangement manner of the output fiber array in this embodiment is an optional example, and are not limited. For example, the output fiber has specific curvature in the dispersion direction. For another example, positions of the plurality of output fibers included in the output fiber array may be randomly arranged. For another example, the plurality of output fibers included in the output fiber array are arranged in a two-dimensional form.

In this embodiment, for example, the first output beam 361 emitted from the optical switching engine 305 is deflected to the first output fiber of the output fiber array, and the second output beam 362 emitted from the optical switching engine 305 is deflected to the second output fiber of the output fiber array. In this case, the optical switching engine 305 deflects the transmission direction of the third beam 315 at a first deflection angle, to emit the deflected first output beam 361. The optical switching engine 305 deflects the transmission direction of the third beam 316 at a second deflection angle, to emit the deflected second output beam 362, where the first deflection angle corresponds to the position of the first output fiber, and the second deflection angle corresponds to the position of the second output fiber, so that the first output beam 361 emitted from the optical switching engine 305 can be transmitted to the first output fiber, and the second output beam 362 emitted from the optical switching engine 305 can be transmitted to the second output fiber. Specifically, the first deflection angle may be an included angle between the transmission direction of the third beam 315 and the transmission direction of the first output beam 361. The second deflection angle may be an included angle between the transmission direction of the third beam 316 and the transmission direction of the second output beam 362. For example, in the third plane XOZ shown in FIG. 5, the first deflection angle is different from the second deflection angle. In the second plane YOZ shown in FIG. 4, the first deflection angle may be the same as the second deflection angle. Values of the first deflection angle and the second deflection angle described in this embodiment are related to the arrangement positions of the first output fiber and the second output fiber in the output fiber array.

The first output beam 361 and the second output beam 362 that are emitted from the optical switching engine 305 are transmitted to the second lens 306, and the second lens 306 is configured to: collimate each output beam in the dispersion direction, and send the collimated first output beam 361 and the collimated second output beam 362 to the dispersion unit 304. In this embodiment, in the dispersion direction, a beam waist of the first output beam 361 is greater than a beam waist of the collimated first output beam 361 due to a collimating function of the second lens 306. For descriptions of the beam waist, refer to the descriptions of the beam waist of the input beam 311. Details are not described again. For descriptions of collimating the second output beam 362 in the dispersion direction by the second lens 306, refer to the descriptions of collimation of the first lens 306 in the dispersion direction. Details are not described again.

The dispersion unit 304 receives the first output beam 361 and the second output beam 362 from the second lens 306, and the dispersion unit 304 has two functions.

Function 3: The dispersion unit 304 has a wavelength-based combining function.

For example, the dispersion unit 304 receives N output beams from the second lens 306, and wavelengths of the N output beams are respectively *λ*₁, *λ*₂, *λ*₃, λ_{N-1}, and *λ*_{N} . It should be noted that a value of N is not limited in embodiments. In this example, a wavelength of the first output beam 361 may be *λ*₁, and a wavelength of the second output beam 362 may be *λ*_{N} . The optical metasurface structure in the dispersion unit 304 includes a plurality of regions, and the plurality of regions specifically include a first region and a second region. The first region is configured to transmit the output beam to the first output fiber, and the second region is configured to transmit the output beam to the second output fiber. In the second plane YOZ shown in FIG. 4, because the positions of the first output fiber and the second output fiber overlap, positions of the first region and the second region of the optical metasurface structure included in the dispersion unit 304 overlap in the second plane YOZ. In the third plane XOZ shown in FIG. 5, because the positions of the first output fiber and the second output fiber are separated, the positions of the first region and the second region of the optical metasurface structure included in the dispersion unit 304 are separated in the third plane XOZ. If *λ*₁ , *λ*₂, and *λ*₃ need to be emitted from the first output fiber, *λ*₁, *λ*₂, and *λ*₃ that are emitted from the second lens 306 are transmitted to the first region of the optical metasurface structure. If *λ*_{N-1} and *λ*_{N} need to be emitted from the second output fiber, λ_{N-1} and *λ*_{N} that are emitted from the second lens 306 are transmitted to the second region of the optical metasurface structure. The first region of the optical metasurface structure is configured to combine *λ*₁, *λ*₂, and *λ*₃ to obtain a first combined beam 371. The second region of the optical metasurface structure is configured to combine λ_{N-1} and *λ*_{N} to obtain a second combined beam 372. Each of the first region and the second region described in this embodiment includes a plurality of nanostructures. For descriptions of the nanostructures, refer to the descriptions of the function 1 and the function 2 of the dispersion unit 304. Details are not described again.

Function 4: The dispersion unit 304 has a function of focusing each combined beam in the port direction.

Because the dispersion unit 304 described in this embodiment has curvature in the port direction, the dispersion unit 304 described in this embodiment can focus each combined beam. For specific descriptions of focusing in the dispersion direction, refer to the descriptions of focusing of the second lens 306 in the port direction. Details are not described again.

In this embodiment, in the first region and the second region of the dispersion unit described in this embodiment, to implement the function 3 and the function 4, a nanostructure included in the first region is different from a nanostructure included in the second region. That the nanostructure included in the first region is different from the nanostructure included in the second region means at least one of the following:
A quantity of nanostructures included in the first region is different from a quantity of nanostructures included in the second region, dimensions of the nanostructure included in the first region are different from dimensions of the nanostructure included in the second region, an arrangement of the nanostructure included in the first region is different from an arrangement of the nanostructure included in the second region, and a shape of the nanostructure included in the first region is different from a shape of the nanostructure included in the second region. For descriptions of the quantity, dimensions, arrangements, and shapes of the nanostructures, refer to the descriptions of the quantity, dimensions, arrangements, and shapes of the first nanostructures included in the first unit cell shown above. Details are not described again.

The first combined beam 371 and the second combined beam 372 that are emitted from the dispersion unit 304 are transmitted to the first lens 303. The first lens 303 is configured to focus the first combined beam 371 to the first output fiber in the dispersion direction, and the first lens 303 is further configured to focus the second combined beam 372 to the second output fiber in the dispersion direction. For descriptions of focusing of the first lens 303 in the dispersion direction, refer to the descriptions of focusing of the dispersion unit 304 in the port direction. Details are not described again. In this embodiment, for example, the first output fiber is different from the second output fiber. In another example, the first output fiber and the second output fiber may be a same output fiber.

According to the WSS described in this embodiment, the WSS can route any wavelength input by the input fiber to any output fiber included in the output fiber array, to independently route any wavelength to any output port. In addition, the dispersion unit is a component that has the functions of splitting in the dispersion direction and collimating in the port direction. In addition, the dispersion unit also has the functions of combining in the dispersion direction and focusing in the port direction. In this way, the WSS described in this embodiment does not need to be provided with a lens group having curvature in the port direction. This reduces a quantity of components included in the WSS, reduces difficulty in assembling the WSS, and improves assembly efficiency of the WSS and integration of the WSS. The WSS described in this embodiment does not need to be provided with the lens group having the curvature in the port direction. This reduces complexity of an optical path in a process of routing a beam by the WSS, and improves accuracy of routing a transmission direction of the beam. The optical metasurface structure in the dispersion unit described in this embodiment is manufactured by the nanostructure, thereby improving diffraction efficiency, and reducing an insertion loss of the WSS.

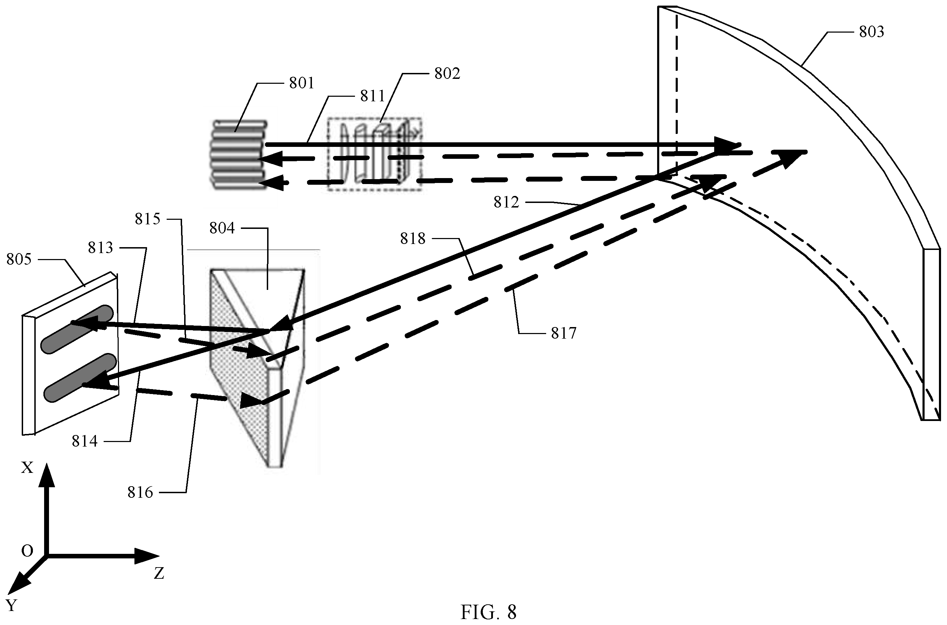

FIG. 3 shows an example in which the optical metasurface structure included in the dispersion unit is a reflective optical metasurface structure. FIG. 8 shows an example in which an optical metasurface structure included in a dispersion unit is a transmissive optical metasurface structure. FIG. 8 is an example diagram of an overall structure of a second embodiment of a WSS according to this application.

The WSS described in this embodiment includes an FA 801, a beam shaping and polarization splitting component 802, a dispersion-direction lens group 803, a dispersion unit 804, and an optical switching engine 805. For descriptions of the FA 801, the beam shaping and polarization splitting component 802, the dispersion-direction lens group 803, and the optical switching engine 805 described in this embodiment, refer to the descriptions corresponding to FIG. 3. Details are not described again.

An input fiber included in the FA 801 transmits an input beam 811 to the dispersion-direction lens group 803. The dispersion-direction lens group 803 collimates the input beam 811 in a dispersion direction to obtain a collimated first beam 812. The dispersion-direction lens group 803 is configured to transmit the first beam 812 to the dispersion unit 804. For descriptions of a specific process, refer to the descriptions of the process in which the dispersion unit receives the first beam corresponding to FIG. 3 to FIG. 5. Details are not described again. The dispersion unit 804 in this embodiment is configured to: decompose the first beam 812 irradiated on the dispersion unit 804 into a plurality of second beams with different wavelengths, and collimate each second beam in a port direction. For descriptions of a specific decomposition and collimation process, refer to the descriptions of the process in which the dispersion unit decomposes the first beam to obtain the plurality of second beams and performs collimation corresponding to FIG. 3 to FIG. 5. Details are not described again.

The plurality of second beams in this embodiment specifically include a first target beam 813 and a second target beam 814, and the optical metasurface structure included in the dispersion unit 804 is the transmissive optical metasurface structure. In this case, the first target beam 813 and the second target beam 814 that are decomposed by the dispersion unit 804 are transmitted from the dispersion unit 804 and transmitted to the optical switching engine 805. If the dispersion unit 804 is of a transmissive type, when the first beam passes through nanostructures having different propagation modes or resonance modes, the second beams transmitted from the optical metasurface structure have different transmission phases. In addition, transmittance is effectively improved. In the dispersion unit 804 in this embodiment, different nanostructures can generate different propagation modes or resonance modes due to at least one of the following: dimensions, distribution forms, or shapes of the nanostructures. When the first beam passes through the nanostructures having different propagation modes or resonance modes, the second beams transmitted from the optical metasurface structure have different phases. At least one of the optical metasurface structure and a substrate described in this embodiment is configured to transmit the second beam. For example, the material, the arrangement, the shape, or the like of the nanostructure included in the optical metasurface structure may be adjusted, so that the optical metasurface structure is of a transmissive type. For another example, a material of the substrate may be adjusted, so that the optical metasurface structure is of a transmissive type. For descriptions of a structure of the dispersion unit 804 described in this embodiment, refer to the descriptions of the structure of the dispersion unit corresponding to FIG. 3. Details are not described again.

The first target beam 813 and the second target beam 814 that are emitted from the dispersion unit 804 are collimated, and then transmitted to the optical switching engine 805. The optical switching engine 805 is configured to deflect a transmission direction of each second beam, so that the optical switching engine 805 emits a plurality of output beams whose transmission directions are deflected. The optical switching engine 805 deflects a transmission direction of the second beam 813 at a first deflection angle, to emit a deflected first output beam 815. The optical switching engine 805 deflects a transmission direction of the second target beam 814 at a second deflection angle, to emit a deflected second output beam 816. The first deflection angle corresponds to a position of a first output fiber, and the second deflection angle corresponds to a position of the second output fiber. For descriptions of the first deflection angle and the second deflection angle, refer to the descriptions corresponding to FIG. 3 to FIG. 5. Details are not described again. The first output beam 815 and the second output beam 816 that are emitted from the optical switching engine 805 are transmitted to the dispersion unit 804. The dispersion unit 804 is configured to combine first output beams 815 to obtain a first combined beam 817. The dispersion unit 804 is further configured to combine second output beams 816 to obtain a second combined beam 818. For descriptions of combining of the dispersion unit 804, refer to FIG. 3 to FIG. 5. Details are not described again. The first combined beam 817 is transmitted to the first output fiber to be emitted from the WSS. The second combined beam 818 is transmitted to the second output fiber to be emitted from the WSS. For a specific process, refer to the process in which the combined beam is output from the output fiber corresponding to FIG. 3 to FIG. 5. Details are not described again.

According to the WSS described in this embodiment, the WSS can route any wavelength input by the input fiber to any output fiber included in the output fiber array, to independently route any wavelength to any output port. In addition, the dispersion unit is a component that has both a splitting function and a function of collimating each second beam in the port direction. In addition, the dispersion unit further has both a combining function and a function of focusing each beam in the port direction. In this way, the WSS described in this embodiment does not need to be provided with a lens group having curvature in the port direction. This reduces a quantity of components included in the WSS, reduces difficulty in assembling the WSS, and improves assembly efficiency of the WSS and integration of the WSS. The WSS described in this embodiment does not need to be provided with the lens group having the curvature in the port direction. This reduces complexity of an optical path in a process of routing a beam by the WSS, and improves accuracy of routing a transmission direction of the beam. The optical metasurface structure is manufactured by the nanostructure, thereby improving diffraction efficiency, and reducing an insertion loss of the WSS.

An embodiment of this application further provides an optical switching node. For descriptions of the optical switching node, refer to the descriptions corresponding to FIG. 1. Details are not described again.

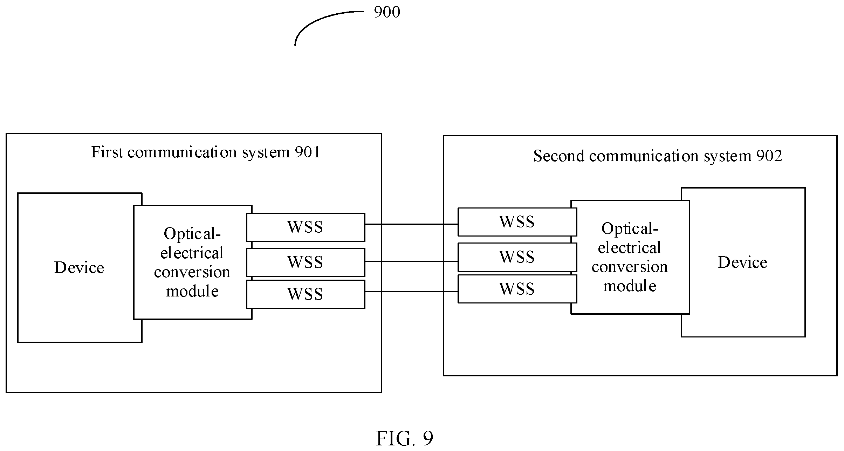

An embodiment of this application further provides an optical network. For a structure of the optical network, refer to FIG. 9. FIG. 9 is an example diagram of a structure of an embodiment of an optical network according to this application.

The optical network 900 provided in this application specifically includes a first communication system 901 and a second communication system 902, and the first communication system 901 is connected to the second communication system 902 via an optical fiber. A quantity of communication systems included in the optical network 900 is not limited in this example. For example, the first communication system 901 may be connected to a plurality of second communication systems 902 via an optical splitter. A networking type of the optical network is not limited in this example. For example, the optical network may use ring networking or star networking. A network type to which the optical network 900 is applied is not limited in this example. For example, if the optical network 900 shown in this example is applied to a passive optical network (passive optical network, PON), one of the first communication system 901 and the second communication system 902 may be an optical network unit (optical network unit, ONU) or an optical network terminal (optical network terminal, ONT), and the other of the first communication system 901 and the second communication system 902 may be an optical line terminal (optical line terminal, OLT). If the optical network 900 is applied to an optical transport network (optical transport network, OTN), both the first communication system 901 and the second communication system 902 may be OTN devices. The optical network 900 shown in this example may also be applied to a data center network (data1 center network, DCN), a metropolitan area network, or the like. This is not specifically limited. The first communication system 901 is used as an example. A device type of the first communication system 901 is not limited in this example. For example, the first communication system 901 may be an optical transmission device, an optical access device, a router, a switch, a wireless base station, a wireless remote access device, a wireless baseband signal processing device, or may be a computing server (usually referred to as a server for short), a high performance computer (high performance computer, HPC), a storage server, or a memory resource pool. A type of the first communication system 901 is not limited in this example, provided that the first communication system 901 has an electrical-optical conversion function and has an optical interface that can be connected to an optical fiber. For descriptions of a type of the second communication system 902, refer to the descriptions of the first communication system 901. Details are not described again.

The first communication system 901 is used as an example. The first communication system 901 includes a housing body, and a device and one or more optical-electrical conversion modules are fastened in the housing body. One or more WSSs connected to the optical-electrical conversion module are further fastened in the housing body. The optical-electrical conversion module may also be referred to as an optical transceiver module, an optical module, or the like. A quantity of devices included in the first communication system 901 is not limited in this example. The device and the first communication system 901 are an integrated device, or the device is an independent pluggable board. A quantity of optical-electrical conversion modules included in the first communication system 901 is not limited in this example. The optical-electrical conversion module may be integrated with the device, or may be plugged into a board of the device. This is not specifically limited. Specifically, a processing chip and a connector are packaged in the device. The processing chip may be one or more chips, or one or more integrated circuits. For another example, the processing chip may be one or more optical digital signal processors (optical digital signal processor, oDSP), a field-programmable gate array (field-programmable gate array, FPGA), an application-specific integrated circuit (application specific integrated circuit, ASIC), a system on chip (system on chip, SoC), a central processing unit (central processor unit, CPU), a network processor (network processor, NP), a microcontroller unit (microcontroller unit, MCU), a programmable logic device (programmable logic device, PLD), a network interface card chip, a storage interface chip, or another integrated chip, or any combination of the foregoing chips or processing modules. Details are not described again. The processing chip is connected to the optical-electrical conversion module via the connector, and an optical interface of the optical-electrical conversion module is connected to an input fiber or an output fiber of the WSS. For descriptions of a structure of the second communication system 902, refer to the descriptions of the structure of the first communication system 901. Details are not described again.

The optical-electrical conversion module in this embodiment may be connected to one or more WSSs. For descriptions of a structure of the WSS, refer to the descriptions in the foregoing embodiment. Details are not described again. The WSS and the optical-electrical conversion module may be of an integrated structure. For another example, the WSS may be plugged into the optical-electrical conversion module. This is not specifically limited. In the first communication system 901, the processing chip is configured to send a first service electrical signal to the optical-electrical conversion module; the optical-electrical conversion module is configured to: convert the first service electrical signal into a first input beam, and transmit the first input beam to the input fiber of the WSS; and the WSS is configured to route a transmission direction of the first input beam, to emit an output beam. For descriptions of the specific process, refer to the foregoing descriptions of routing the transmission direction of the input beam by the WSS. Details are not described again. The first communication system 901 is still used as an example. The output fiber of the WSS receives a second input beam from another communication system (for example, the second communication system 902); and the WSS routes a transmission direction of the second input beam, for transmission to the input fiber of the WSS. For descriptions of the specific process, refer to the descriptions of routing the transmission direction of the first input beam by the WSS in the first communication system 901. Details are not described again.

An embodiment of this application further provides a communication system. For a structure of the communication system, refer to the descriptions of the first communication system or the second communication system shown in FIG. 9. Details are not described again.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the spirit and scope of the technical solutions of embodiments of this application.

## Claims

1. A wavelength selective switch, comprising: an input fiber, a lens group, a dispersion unit, an optical switching engine, and an output fiber array, wherein the dispersion unit comprises an optical metasurface structure, and the optical metasurface structure comprises a plurality of nanostructures arranged along a first plane;
the input fiber is configured to transmit an input beam to the lens group, wherein a transmission direction of the input beam intersects with the first plane;
the lens group is configured to: collimate the input beam to obtain a first beam, and transmit the first beam to the dispersion unit;
the optical metasurface structure is configured to decompose the first beam to obtain a plurality of second beams, and the optical metasurface structure is further configured to collimate the plurality of second beams to transmit the plurality of collimated second beams to the optical switching engine; and
the optical switching engine is configured to deflect a transmission direction of each of the plurality of second beams to obtain a plurality of output beams, wherein the plurality of output beams are output via the output fiber array.

2. The wavelength selective switch according to claim 1, wherein optical paths of the plurality of second beams emitted from the dispersion unit have different projection directions in a second plane, the optical paths of the plurality of second beams emitted from the dispersion unit have different projection directions in a third plane, and the third plane intersects with the first plane and the second plane.

3. The wavelength selective switch according to claim 2, wherein the lens group is configured to collimate the input beam in a dispersion direction, the dispersion unit is configured to collimate the second beam in a port direction, the dispersion direction intersects with the third plane, and the port direction intersects with the second plane.

4. The wavelength selective switch according to claim 2 or 3, wherein the plurality of second beams comprise a first target beam and a second target beam, the first target beam forms a first light spot on the optical switching engine, the second target beam forms a second light spot on the optical switching engine, positions of the first light spot and the second light spot are separated from each other in the second plane, and the positions of the first light spot and the second light spot at least partially overlap in the third plane.

5. The wavelength selective switch according to any one of claims 1 to 4, wherein the optical metasurface structure comprises a plurality of unit cells, each of the plurality of unit cells comprises at least one nanostructure, the plurality of unit cells comprise a first unit cell and a second unit cell, and a nanostructure comprised in the first unit cell is different from a nanostructure comprised in the second unit cell.

6. The wavelength selective switch according to claim 5, wherein that the nanostructure comprised in the first unit cell is different from the nanostructure comprised in the second unit cell means at least one of the following:
a quantity of nanostructures comprised in the first unit cell is different from a quantity of nanostructures comprised in the second unit cell, dimensions of the nanostructure comprised in the first unit cell are different from dimensions of the nanostructure comprised in the second unit cell, an arrangement of the nanostructure comprised in the first unit cell is different from an arrangement of the nanostructure comprised in the second unit cell, and a shape of the nanostructure comprised in the first unit cell is different from a shape of the nanostructure comprised in the second unit cell.

7. The wavelength selective switch according to claim 5 or 6, wherein the optical metasurface structure comprises a plurality of regions, each of the plurality of regions comprises a plurality of unit cells, the plurality of regions comprise a first region and a second region, and a nanostructure comprised in the first region is different from a nanostructure comprised in the second region;
the first region is configured to receive a first output beam from the optical switching engine, the second region is configured to receive a second output beam from the optical switching engine, and the plurality of output beams comprise the first output beam and the second output beam; and
the first region is further configured to focus the first output beam in the port direction, wherein the focused first output beam is output via a first output fiber; the second region is further configured to focus the second output beam in the port direction, wherein the focused second output beam is output via a second output fiber; and the output fiber array comprises the first output fiber and the second output fiber.

8. The wavelength selective switch according to claim 7, wherein that the nanostructure comprised in the first region is different from the nanostructure comprised in the second region means at least one of the following:
a quantity of nanostructures comprised in the first region is different from a quantity of nanostructures comprised in the second region, dimensions of the nanostructure comprised in the first region are different from dimensions of the nanostructure comprised in the second region, an arrangement of the nanostructure comprised in the first region is different from an arrangement of the nanostructure comprised in the second region, and a shape of the nanostructure comprised in the first region is different from a shape of the nanostructure comprised in the second region.

9. The wavelength selective switch according to any one of claims 1 to 8, wherein the dispersion unit comprises a substrate, and a first surface of the substrate comprises the optical metasurface structure.

10. The wavelength selective switch according to claim 9, wherein a second surface of the substrate comprises at least one coating, and a material of the substrate is different from a material of the coating.

11. The wavelength selective switch according to claim 9 or 10, wherein the dispersion unit further comprises a prism, a first surface of the prism faces the lens group, and a second surface of the prism is connected to the second surface of the substrate.

12. The wavelength selective switch according to any one of claims 1 to 11, wherein that the dispersion unit is configured to transmit the plurality of collimated second beams to the optical switching engine comprises:
the optical metasurface structure is configured to reflect the plurality of collimated second beams to the optical switching engine, or the optical metasurface structure is configured to transmit the plurality of collimated second beams to the optical switching engine.

13. An optical switching node, wherein the optical switching node comprises a plurality of wavelength selective switches, two different wavelength selective switches are connected to each other via an optical fiber, and the wavelength selective switch is the wavelength selective switch according to any one of claims 1 to 12.

14. A communication system, comprising a housing body, wherein a processing chip, an optical-electrical conversion module, and a wavelength selective switch are fastened in the housing body, the processing chip, the optical-electrical conversion module, and the wavelength selective switch are sequentially connected, and the wavelength selective switch is the wavelength selective switch according to any one of claims 1 to 12;
the processing chip is configured to send a service electrical signal to the optical-electrical conversion module;
the optical-electrical conversion module is configured to convert the service electrical signal into the input beam; and
the wavelength selective switch is configured to route a transmission direction of the input beam, to emit the output beam.
